# EUROPÄISCHE PATENTSCHRIFT

(11) **EP 3 330 466 B1**
(45) Veröffentlichungstag und Bekanntmachung des Hinweises auf die Patenterteilung: **25.03.2020**
(21) Anmeldenummer: 16202033.3
(22) Anmeldetag: 02.12.2016
(51) Int. Cl.: H02K 1/00, E06B 3/90, E05F 15/608, E06B 11/08

(54) **KARUSSELLTÜRANORDNUNG UND VERFAHREN ZUM BETRIEB EINER KARUSSELLTÜRANORDNUNG**
CAROUSEL DOOR ASSEMBLY AND METHOD FOR OPERATING A CAROUSEL DOOR ASSEMBLY
SYSTÈME DE PORTE TOURNANTE ET PROCÉDÉ DE FONCTIONNEMENT D'UN SYSTÈME DE PORTE TOURNANTE

(43) Veröffentlichungstag der Anmeldung: 06.06.2018
(73) Patentinhaber: dormakaba Deutschland GmbH, 58256 Ennepetal (DE)
(72) Erfinder: SEMELKA, Wolfgang, 58256 Ennepetal (DE); MEIERING, Dennis, 58256 Ennepetal (DE)
(74) Vertreter: Balder IP Law, S.L.

(56) Entgegenhaltungen:
- EP-A1- 3 034 760

## Beschreibung

Die vorliegende Erfindung betrifft eine Karusselltüranordnung sowie ein Verfahren zum Betrieb einer Karusselltüranordnung. Insbesondere betrifft die vorliegende Erfindung eine Erleichterung einer manuellen Betätigung der Karusselltüranordnung in einem Freilaufbetrieb.

Bekannt sind Karusselltüranordnungen, welchen einen Asynchronmotor mit nachgeschaltetem Getriebe aufweisen. Hierbei kommt typischerweise ein mehrstufiges Getriebe (z. B. Schneckenradgetriebe, Zahnriemenstufen) zum Einsatz. Zum Antreiben des Drehkreuzes der Karusselltüranordnung wird eine Vielzahnwelle genutzt, die fest mit der Antriebseinheit verbunden ist. Dieses Antriebssystem wird zuerst in die Deckenkonstruktion eingebaut. Anschließend wird das Drehkreuz inklusive der Türflügel montiert.

EP 3 034 760 A1 offenbart eine Karusselltüranordnung mit einem elektrischen Antrieb, welcher als elektronisch kommutierter Vielpolmotor mit einem Stator und einem Rotor ausgestattet ist. Der Rotor ist koaxial zur Drehachse des Drehkreuzes anordenbar. Eine Adaptereinheit ist zum Befestigen an einer Deckenkonstruktion vorgesehen.

EP 3 034 760 A1 offenbart alle Merkmale des Oberbegriffs von Anspruch 1 und 6.

Nachteilig an einer derartigen Ausführung ist, dass beim manuellen Betätigen der Karusselltüranordnung ein Strom durch die geschlossenen Statorwicklungen induziert wird, welcher ein unerwünschtes Bremsmoment erzeugt. Alternativ sind Kupplungen mit einem entsprechenden Hardware-Aufwand erforderlich.

Es ist eine Aufgabe der vorliegenden Erfindung, eine Karusselltüranordnung und ein Verfahren anzugeben, welche den vorstehend identifizierten Nachteil ausräumen.

Die Lösung der Aufgabe erfolgt durch die Merkmale der unabhängigen Ansprüche. Die abhängigen Ansprüche haben vorteilhafte Ausgestaltungen der Erfindung zum Gegenstand.

Somit wird die Aufgabe gelöst durch ein Verfahren zum Betrieb einer Karusselltüranordnung, welche ein Drehkreuz mit zumindest zwei Türflügeln aufweist. Drei, vier oder mehr Türflügel sind ebenfalls optional am Drehkreuz anordenbar und können insbesondere um identische Winkel zueinander beabstandet sein. Eine Auswerteeinheit (z. B. in Form eines programmierbaren Prozessors, eines Mikrokontrollers, eines elektronischen Steuergerätes o.ä.) ist eingerichtet, anhand von Informationen über die Karusselltüranordnung einen ebenfalls vorhandenen elektrischen Antrieb für das Drehkreuz mit einem Stator und einem Rotor anzusteuern. Der elektrische Antrieb kann beispielsweise als elektronisch kommutierter Vielpolmotor mit einem Stator umfassend ein Stator-Blechpaket und mehrere Spulen, sowie mit einem Rotor umfassend ein Rotorblechpaket und mehrere Permanentmagneten ausgebildet sein. Der Rotor ist koaxial zur Drehachse anordenbar und mit einem Drehkreuz zum direkten, getriebelosen Antrieb verbindbar. Die Auswerteeinheit ist eingerichtet, zumindest die nachfolgend genannten Schritte auszuführen. Zunächst wird ermittelt, dass eine extern veranlasste Drehung des Drehkreuzes in einem ersten Betriebszustand eines Freilaufbetriebes vorliegt. Mit anderen Worten kann eine zumindest nicht intern veranlasste Drehung des Drehkreuzes (insbesondere als solche) sensorisch detektiert werden. Generell kann hierzu die Tatsache bestimmt werden, dass ein Freilaufbetrieb der Karusselltüranordnung vorliegt und eine (wie auch immer veranlasste) Drehung des Drehkreuzes (insbesondere unterhalb eines vordefinierten Drehzahlbereiches) erfolgt. Beispielsweise kann ein Drehzahl- und/oder Drehpositionssensor ausgewertet werden, welcher die Drehung des Drehkreuzes erkennt. Alternativ oder zusätzlich kann eine Strommessung im Antrieb einen Strom durch den Antrieb ermitteln, welcher nicht durch eine externe Spannungsquelle für die Karusselltüranordnung veranlasst ist. Da ein solcher Stromfluss ein Bremsmoment auf das Drehkreuz ausübt, welches zumindest bis zu einer vordefinierten Obergrenze einer Drehzahl des Drehkreuzes den Anwenderkomfort mindert, kann in einem zweiten Schritt ein erstes elektrisches Signal an den Stator angelegt werden, um den induzierten Strom zu vermeiden. Das erste elektrische Signal kann eine vordefinierte Spannung, einen vordefinierten Strom, eine vordefinierte Amplitude und eine vordefinierte Frequenz aufweisen. Die vorgenannten Kenngrößen des ersten elektrischen Signals können beispielsweise mittels Pulsweitenmodulation einer Gleichspannung erzeugt werden. Mit anderen Worten können Spannungen, Frequenzen und Phasenlagen durch eine entsprechende Taktung einer Versorgungsspannung des elektrischen Antriebs erzeugt werden. Wird das erste elektrische Signal in etwa derart gewählt, dass es dieselben Parameter wie eine durch die Drehung des Drehkreuzes induzierte Spannung aufweist, heben sich das erste elektrische Signal und die induzierte Spannung derart gegenseitig auf, dass kein Strom durch den Stator des elektrischen Antriebs fließt. Mit anderen Worten wird kein elektromagnetisches Moment durch den elektrischen Antrieb erzeugt. Der elektrische Antrieb wird betrieben, als wären die elektrischen Wicklungen des Stators offen. Der erste Betriebszustand kann als dauerhaft erlaubter Betriebszustand der Karusselltüranordnung verstanden werden. Sofern die Drehzahl des Drehkreuzes über der Zeit variiert, kann das erste elektrische Signal über der Zeit hinsichtlich seiner elektrischen Parameter nachgeführt werden, um den vorstehend beschriebenen Zustand aufrecht zu erhalten. Im Ergebnis wird ein komfortableres Anwendererlebnis mit der erfindungsgemäßen Karusselltüranordnung erzielt.

Bevorzugt kann aus dem vorstehend beschriebenen Betriebszustand in einen zweiten Betriebszustand gewechselt werden, welcher sich durch eine höhere Drehzahl des Drehkreuzes beziehungsweise des Rotors als diejenige des Drehkreuzes im ersten Betriebszustand auszeichnet. Die höhere Drehzahl des Drehkreuzes ist zum Beispiel für die Betriebssicherheit, den Verschleiß o.ä. der Karusselltüranordnung nachteilig, weshalb das Drehkreuz beziehungsweise der Rotor zurück in den Drehzahlbereich des ersten Betriebszustandes geführt werden soll. Wird nun (z. B. aufgrund der induzierten Spannung oder mittels eines Positionssensors/Drehzahlsensors) ermittelt, dass die höhere Drehzahl des Drehkreuzes anliegt, wird ein zweites elektrisches Signal an die elektrischen Anschlüsse des Antriebs angelegt, welches derart gewählt ist, dass ein Bremsmoment auf das Drehkreuz beziehungsweise den Rotor ausgeübt wird. Die elektrischen Anschlüsse des Stators werden somit mit dem zweiten elektrischen Signal derart beaufschlagt, dass ein Strom durch die Wicklungen des Stators fließt, welcher ein Bremsmoment auf den Rotor zufolge hat, solange die Drehzahl höher als die erlaubte Drehzahl für den Freilaufbetrieb ist. Auch im zweiten Betriebszustand kann das zweite elektrische Signal entsprechend dem ersten elektrischen Signal kontinuierlich nachgeregelt werden. Insbesondere ist eine mit der Drehzahl ansteigende Bremsmomentcharakteristik vorteilhaft. Der zweite Betriebszustand kann als nicht dauerhaft erlaubter Betriebszustand aufgefasst werden. Aufgrund der Tatsache, dass das erste elektrische Signal kontinuierlich oder stufenförmig in das zweite elektrische Signal überführt werden kann, ergeben sich keine ruckartigen Bremsmomentschwankungen auf das Drehkreuz oder die Türflügel, wodurch der Anwenderkomfort und das Anwendererlebnis bei der Betätigung einer erfindungsgemäßen Karusselltüranordnung verbessert werden. Insbesondere kann ein kontinuierlicher Übergang vom ersten Betriebszustand in den zweiten Betriebszustand durch ein kontinuierliches Variieren der elektrischen Parameter (z. B. des Pulsweitenverhältnisses) des ersten Signals zur Erzeugung des zweiten Signals vorgenommen werden.

Sofern der Anwender beziehungsweise die Anwender der erfindungsgemäßen Karusselltüranordnung trotz des im zweiten Betriebszustand erzeugten Bremsmomentes die Drehzahl des Drehkreuzes weiter erhöhen, kann ein drittes elektrisches Signal in einem dritten Betriebszustand erzeugt werden, welches hinsichtlich seiner Spannung, seines Stromes, seiner Amplitude und/oder seiner Frequenz derart ausgestaltet ist, dass es ein Bremsmoment auf das Drehkreuz beziehungsweise den Rotor erzeugt, welches höher als das Bremsmoment aufgrund des zweiten elektrischen Signals im zweiten Betriebszustand ist. Insbesondere kann hier ein linearer Zusammenhang zwischen den Drehzahlen und den Bremsmomenten erzeugt werden. Optional kann auch ein progressives Ansteigen des Bremsmomentes über der Drehzahl im nicht erlauben Betriebszustand vorgesehen sein, um eine rechtzeitige Herbeiführung eines erlaubten Betriebszustandes zu begünstigen.

Es sei angemerkt, dass nicht lediglich eine Anwenderbetätigung dazu führen kann, dass sich das Drehkreuz einer erfindungsgemäßen Karusselltüranordnung im ersten Betriebszustand (Freilaufbetrieb) dreht. Beispielsweise können Windkräfte, Tiere o.ä. dazu führen, dass das Drehkreuz in einem grundsätzlich erlaubten Drehzahlbereich betätigt wird. Da eine Betätigung durch Tiere oder Windkräfte jedoch nicht immer erwünscht sind beziehungsweise zu Sicherheitsrisiken führen können, kann vorgesehen sein, dass eine Betätigung durch einen Anwender sensorisch von Betätigungen durch Tiere oder Windkräfte unterschieden wird. Beispielsweise kann eine Anwesenheitssensorik, wie sie im Stand der Technik grundsätzlich bekannt ist, melden, dass die Drehung des Drehkreuzes (vermutlich) auf die Betätigung durch einen Anwender zurückzuführen ist. Um die Betätigung des Drehkreuzes für den Anwender so angenehm wie möglich zu machen, kann ausschließlich im Ansprechen auf die Präsenz des Anwenders das erste elektrische Signal im ersten Betriebszustand an die elektrischen Anschlüsse des Stators angelegt werden. Sofern die Betätigung auf Windkräfte, Tiere o.ä. zurückzuführen ist, bleibt das erste elektrische Signal bevorzugt aus, wodurch sich das im Stand der Technik stets vorhandene elektrische Bremsmoment durch den im Stator induzierten Strom ergibt.

Der Kerngedanke der vorliegenden Erfindung könnte auch als "ruckfreier Drehzahlbegrenzer im Freilaufbetrieb" bezeichnet werden. Der Übergang vom erfindungsgemäß mit elektrischer Spannung induktionsfrei gestalteten ersten Betriebszustand in den abgebremsten Betriebszustand erfolgt hierbei ruckfrei und insbesondere nicht in Sprüngen. Hierzu kann ein interner Frequenzumrichter der Karusselltüranordnung in vorteilhafterweise beitragen. Der Freilauf an sich ließe sich grundsätzlich zwar auch dadurch realisieren, dass die Endstufe des Antriebs hochohmig geschaltet wird und somit keine Motorphasenströme fließen können. Allerdings ist ein ruckfreier Übergang vom ungebremsten Betrieb in einen gebremsten Betrieb mit derzeit am Markt erhältlicher Hardware nicht möglich.

Gemäß einem zweiten Aspekt der vorliegenden Erfindung wird eine Karusselltüranordnung vorgeschlagen, welche ein Drehkreuz mit zumindest zwei Türflügeln, insbesondere drei, vier oder mehr Türflügeln, eine Auswerteeinheit (z. B. ein programmierbarer Prozessor, ein Mikrokontroller, ein elektronisches Steuergerät o.ä.) und einen elektrischen Antrieb aufweist. Der Antrieb weist einen Stator und einen Rotor auf. Der Rotor ist insbesondere getriebelos mit dem Drehkreuz beziehungsweise den Türflügeln verbunden. Er kann insbesondere koaxial zu einer Drehachse des Drehkreuzes anordenbar und mit dem Drehkreuz zum direkten Antrieb verbindbar sein. Die Auswerteeinheit ist eingerichtet, in einem ersten Betriebszustand eines Freilaufbetriebes ein erstes elektrisches Signal mit ersten elektrischen Parametern (z. B. Spannung, Strom, Amplitude, Frequenz) an den Stator anzulegen. Das erste elektrische Signal ist derart bemessen, dass eine aufgrund einer extern veranlassten Rotation des Türflügels im Stator induzierte Spannung im Wesentlichen keinen Stromfluss zufolge hat. Wie in Verbindung mit dem erfindungsgemäßen Verfahren ausgeführt, wird der Induktionsstrom im Wesentlichen kompensiert. Dies schließt nicht aus, dass eine insbesondere für Regelungsaspekte vorteilhafte geringe Stromstärke durch den Stator zugelassen wird. Lediglich die Bremswirkung des zugelassenen Stroms soll im Wesentlichen vernachlässigbar sein. Alternativ kann der im erfindungsgemäßen Freilaufbetrieb zugelassene Strom durch den Stator derart bemessen sein, dass die auftretenden Reibkräfte der Karusselltüranordnung zumindest anteilig kompensiert werden. Auf diese Weise ist die erfindungsgemäße Karusselltüranordnung eingerichtet, die Merkmale, Merkmalskombinationen und die sich aus diesen ergebenden Vorteile derart ersichtlich in entsprechender Weise zu verwirklichen, dass zur Vermeidung von Wiederholungen auf die obigen Ausführungen verwiesen wird.

Der Stator des elektrischen Antriebs kann zur feststehenden Montage vorgesehen sein. Insbesondere kann er eingerichtet sein, an einer Decke (z. B. eine abgehängte Decke und/oder eine Betondecke) befestigt zu werden. Der Stator kann derart auf der Achse des Türkreuzes angeordnet sein, dass er gemeinsam mit dem Rotor einen koaxial zur Achse des Drehkreuzes angeordneten Luftspalt ausbildet. Mit anderen Worten ist bevorzugt kein Getriebe zwischen dem Antrieb und dem Drehkreuz vorgesehen. Im Ergebnis ist eine spielfreie kinematische Beziehung zwischen dem Antrieb und dem Drehkreuz gegeben.

Die Karusselltüranordnung kann weiter einen Frequenzumrichter aufweisen, welcher bevorzugt auch die Auswerteeinheit und eine Endstufe zur Ansteuerung des elektrischen Antriebs aufweist. Die Auswerteeinheit ist eingerichtet, durch eine Pulsweitenmodulation einen Parameter eines elektrischen Signals zur Ansteuerung des elektrischen Antriebs zu realisieren. Das pulsweitenmodulierte Signal (auch "viertes Signal") kann innerhalb des Frequenzumrichters verwendet werden, um die Endstufe mit einer mehrphasigen Repräsentation des vierten Signals anzusteuern. Beispielsweise kann das vierte Signal ein dreiphasiges Signal sein, welches verwendet wird, um die Halbbrücken einer dreiphasigen Endstufe mit jeweils zwei Signalen anzusteuern, welche im Wesentlichen derart zeitlich zueinander versetzt sind, dass ein zeitgleicher Leitungszustand jeweils zweier Mosfets des jeweiligen Brückenzweiges unterbunden ist. Das vierte Signal kann das erste Signal, das zweite Signal oder das dritte Signal (abhängig vom jeweils aktuellen Betriebszustand) sein.

Die zum Betrieb der erfindungsgemäßen Karusselltüranordnung erforderlichen Komponenten können in einem gemeinsamen Gehäuse angeordnet sein. Alternativ oder zusätzlich können Sie auf einer gemeinsamen Platine angeordnet sein. Das Gehäuse kann den Frequenzumrichter, die Endstufe und die Auswerteeinheit umfassen. Das Gehäuse kann einen (insbesondere gemeinsamen) Anschluss für eine Betriebsspannung der vorgenannten Komponenten aufweisen. Insbesondere kann auch der Antrieb über die Betriebsspannung mit elektrischer Energie versorgt werden.

Bevorzugt kann eine Anwenderschnittstelle an der Karusselltüranordnung vorgesehen sein. Diese kann beispielsweise ein Eingabemodul ("Parametermodul") vorgesehen sein, welches eine Sieben-Segment-Anzeige aufweisen kann. Das Eingabemodul ist zum Definieren des zweiten und/oder des dritten Betriebszustandes eingerichtet. Mit anderen Worten kann eine im Freilaufbetrieb maximal erlaubte Drehzahl über das Eingabemodul festgelegt werden. Die Funktionsumfänge des Eingabemoduls sind auf sämtliche vorgenannte, vordefinierte beziehungsweise vorzudefinierende Parameter erweiterbar.

Die Auswerteeinheit der erfindungsgemäßen Karusselltüranordnung kann eingerichtet sein, auf Basis von Positionssensoren (z. B. Hallsensoren) im elektrischen Antrieb eine aktuelle Drehzahl, eine aktuelle Position und/oder eine aktuelle Geschwindigkeit des Drehkreuzes zu ermitteln. Insbesondere kann über die Positionssensoren das Anliegen einer dem ersten Betriebszustand zuzuordnenden Drehzahl, einer dem zweiten Betriebszustand zuzuordnenden höheren Drehzahl und/oder einer dem dritten Betriebszustand zuzuordnenden dritten Drehzahl ermittelt werden. Die Positionssensoren können beispielsweise auf dem Stator des Antriebs angeordnet sein. Die Positionssensoren können beispielsweise Magnete als Geber auf dem Rotor und Nehmer auf dem Stator des elektrischen Antriebs aufweisen.

Nachfolgend wird die Erfindung anhand der begleitenden Zeichnungen im Detail erläutert. Dabei zeigen:
- Fig. 1: eine Karusselltüranordnung gemäß einem Ausführungsbeispiel der vorliegenden Erfindung;
- Fig. 2: die Karusselltüranordnung in einer geschnittenen Ansicht;
- Fig. 3: wesentliche Bestandteile der Karusselltüranordnung in einer Explosionsdarstellung;
- Fig. 4: ein Blockschaltbild eines Ausführungsbeispiels eines Wechselrichters;
- Fig. 5: ein Flussdiagramm veranschaulichend Schritte eines Ausführungsbeispiels eines erfindungsgemäßen Verfahrens.

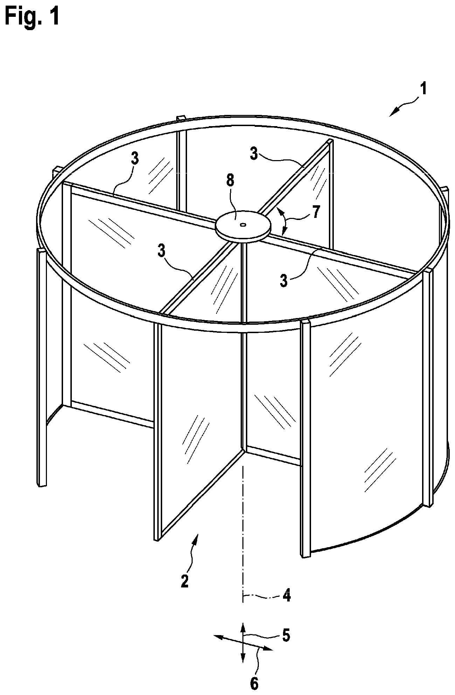

Fig. 1 zeigt eine isometrische Ansicht einer Karusselltüranordnung 1. Die Karusselltüranordnung 1 umfasst ein Drehkreuz 2. Dieses Drehkreuz 2 weist vier Türflügel 3 auf. Die Türflügel 3 sind jeweils um 90° zueinander abgewinkelt. Das Drehkreuz 2 ist um eine Drehachse 4 drehbar angeordnet. Die Drehachse 4 streckt sich in Axialrichtung 5. Senkrecht zur Axialrichtung 5 ist eine Radialrichtung 6 definiert. Um die Axialrichtung 5 ist eine Umfangsrichtung 7 definiert.

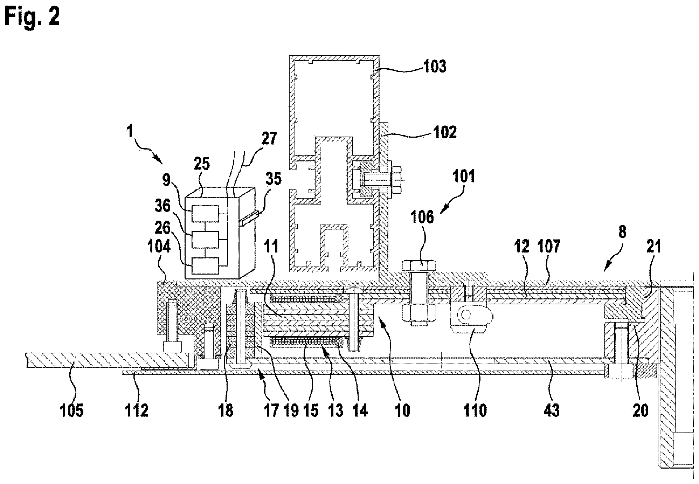

Auf dem Drehkreuz 2 ist ein Antrieb 8 angeordnet. Dieser Antrieb 8 ist als elektronisch kommutierter Vielpolmotor ausgebildet. Der Rotor 17 (s. Fig. 2) dieses Antriebs 8 ist koaxial zur Drehachse 4 mit dem Drehkreuz 2 verbunden. Dadurch ermöglicht der Antrieb 8 einen direkten und getriebelosen Antrieb des Drehkreuzes 2.

Fig. 2 zeigt einen Schnitt durch die Karusselltüranordnung 1. Von der Karusselltüranordnung 1 ist lediglich der Antrieb 8 gezeigt.

Der Antrieb 8 umfasst einen Stator 10 und den Rotor 17. Wie Fig. 1 zeigt, ist der Antrieb 8 über dem Drehkreuz 2 angeordnet. Dabei befindet sich der Rotor 17 zwischen dem Drehkreuz 2 und dem Stator 10.

Fig. 2 zeigt ein drehfest mit dem Rotor 17 verbundenes Verbindungselement, ausgebildet als Vielzahnwelle. Über dieses Verbindungselement ist das Drehkreuz 2 drehfest mit dem Rotor 17 verbunden.

Der Stator 10 umfasst eine Statorscheibe 12. Am äußeren Umfang der Statorscheibe 12 ist ein Statorblechpaket 11 angeordnet. Auf diesem Statorblechpaket 11 stecken die einzelnen Spulen 13 des Stators 10.

Jede Spule umfasst einen Spulenkörper 14, beispielsweise aus Kunststoff. Auf diesem Spulenkörper 14 befinden sich die Wicklungen 15 der einzelnen Spule 13.

Der Rotor 17 umfasst eine Rotorscheibe 43. Diese Rotorscheibe 43 liegt der Statorscheibe 12 gegenüber. Zwischen den beiden Scheiben 43, 12 ist das Statorblechpaket 11 mit den Spulen 13 angeordnet. Am äußeren Umfang der Rotorscheibe 43 ist ein Rotorblechpaket 18 angeordnet. Radial innerhalb des Rotorblechpaketes 18 sind auf dem Rotorblechpaket 18 mehrere Permanentmagneten 19 angeordnet.

Im Bereich der Drehachse 4 sind zwischen der Statorscheibe 12 und der Rotorscheibe 43 ein Axiallager 20 und ein Radiallager 21 ausgebildet. Im gezeigten Ausführungsbeispiel sind das Axiallager 20 und das Radiallager 21 als Gleitlager ausgebildet.

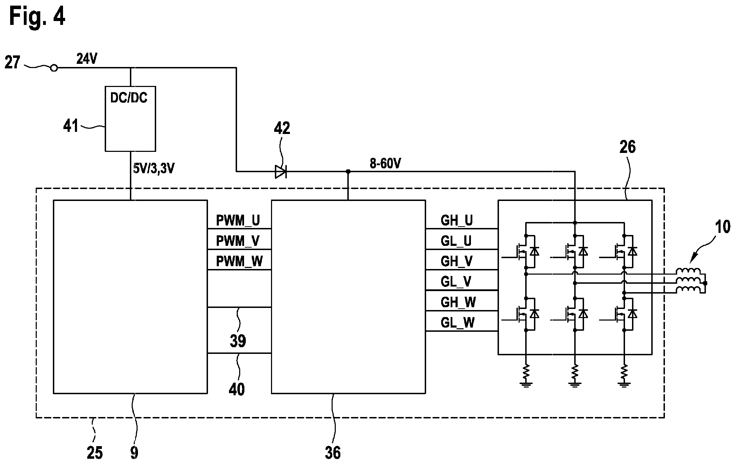

In Fig. 2 ist weiter ein Ausführungsbeispiel eines Frequenzumrichters 25 dargestellt, welcher über einen Anschluss 27 für eine Betriebsspannung verfügt. Innerhalb des Frequenzumrichters 25 sind eine Auswerteeinheit 9, ein Motor-IC 36 (integrierter Schaltkreis zur Antriebssteuerung) und eine Endstufe 26 zur Ansteuerung des Antriebs 8 vorgesehen. Die Auswerteeinheit 9, der Motor-IC 36 und die Endstufe 26 werden in Verbindung mit Fig. 4 eingehender diskutiert. Außen am Frequenzumrichter 25 ist ein Parametermodul 35 als Eingabemodul angeordnet, welches eine Sieben-Segment-Anzeige als Anwenderschnittstelle aufweist. Alternativ oder zusätzlich kann das Parametermodul 35 einen Touchscreen aufweisen.

Der in Fig. 1 gezeigte Antrieb 8 ist Bestandteil der Karusselltüranordnung 1. Diese Karusselltüranordnung 1 ist im Schnitt in Fig. 2 gezeigt. Zur Karusselltüranordnung 1 zählt neben dem Antrieb 8 eine Adaptereinheit 101. Diese Adaptereinheit 101 wird zur Montage des Antriebs 8 an einer übergeordneten Deckenkonstruktion 103 verwendet. Im gezeigten Beispiel umfasst die Deckenkonstruktion 103 zwei parallele horizontale Träger.

Die Adaptereinheit 101 umfasst zumindest ein Deckenbefestigungselement 102. Dieses ist hier als rechtwinklig gebogener Winkel ausgebildet. Das Deckenbefestigungselement 102 wird über eine Verschraubung und entsprechende Nutsteine in den Profilen der Deckenkonstruktion 103 befestigt.

Die Adaptereinheit 101 umfasst ferner eine Adapterplatte 107. Mit dieser Adapterplatte 107 ist das Deckenbefestigungselement 102 fest verbunden, beispielsweise verschweißt.

Am Umfang der Adapterplatte 107 sind mehrere Fixierungselemente 104 der Adaptereinheit 101 befestigt. Diese Fixierungselemente 104 dienen jeweils zur Befestigung eines Unterdeckenelementes 105.

Die Adaptereinheit 101 umfasst ferner zumindest ein Antriebsbefestigungselement 106. Dieses ist hier als Verschraubung ausgebildet und dient zur Befestigung des Antriebs 8 an der Adaptereinheit 101, insbesondere an der Adapterplatte 107.

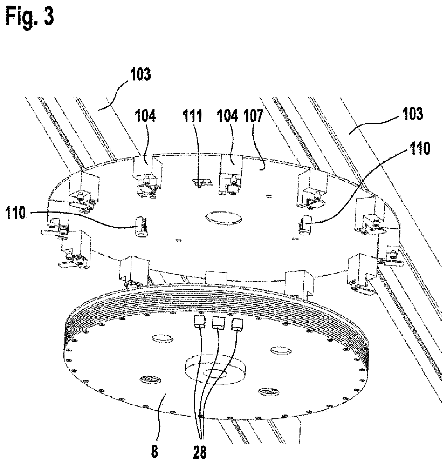

Fig. 2 und 3 zeigen bevorzugte Vorfixiereinheiten 110. Diese Vorfixiereinheiten 110 umfassen hier einen Schnapphaken. Dadurch ist es möglich, den Antrieb 8 von unten an die Adapterplatte 107 anzuheben. Dabei rasten die Vorfixiereinheiten 110 ein und der Antrieb 8 ist an der Adaptereinheit 110 vorfixiert. Daraufhin können die als Verschraubungen ausgebildeten Antriebsbefestigungselemente 106 gesetzt werden.

Ferner zeigt die Darstellung in Fig. 3 eine bevorzugte Anschlussaussparung 111 in der Adapterplatte 107. Über diese Anschlussaussparung 111 ist eine elektrische Kontaktierung, insbesondere ein oder zwei Stecker, innerhalb des Antriebs 8 von oben zugänglich.

Der Antrieb 8 weist Positionssensoren 28 in Form von Hallsensoren auf, welche am Umfang des Stators angeordnet sind. Die Positionssensoren 28 sind eingerichtet, (nicht dargestellte) Magnete als Positionsgeber am (nicht dargestellten) Rotor zu erkennen und eine Drehposition des Antriebs 8 an die (nicht dargestellte) Auswerteeinheit zu melden.

Fig. 4 zeigt ein Blockschaltbild eines Ausführungsbeispiels eines Wechselrichters für eine erfindungsgemäße Karusselltüranordnung. Über einen Anschluss 27 wird eine Betriebsspannung in Höhe von 24V an das elektrische System angeschlossen. Ein DC/DC-Wandler 41 speist einen Mikrocontroller als Auswerteeinheit 9 mit einer Spannung von 5V oder wahlweise 3,3V. Überdies wird die Betriebsspannung über eine Diode 42 auf einen Motor-IC 36 und eine Endstufe 26 für eine Bestromung des Stators 10 gegeben. Die Motorspannung kann bspw. in einem vordefinierten Bereich liegen. Der Mikrocontroller kann weitere Eingangsgrößen (nicht dargestellt) aufweisen. Bspw. können die Hallsensoren zur Ermittlung einer Drehposition des Antriebs an den Mikrocontroller angeschlossen sein. Der Mikrocontroller liefert pulsweitenmodulierte Signale zur Ansteuerung der Endstufe an den Motor-IC 36. Diese weisen ebenfalls einen Pegel von 5V bzw. 3,3V auf. Die pulsweitenmodulierten Signale dienen der Ansteuerung der drei Phasen U, V, W des Stators 10 z. B. mit 6 Signalen U_H, U_L, V_H, V_L, W_H, W_L ("H" - "High", "L" - "Low"). Überdies sind eine Steuerleitung 39 und eine Fehlermeldungs-Leitung ("Error-Reporting") 40 zwischen dem Mikrocontroller und dem Motor-IC 36 vorgesehen. Mittels des Motor-IC 36 können High/Low-Signale mit angepassten Spannungspegeln GH_U, GL_U, GH_V, GL_V, GH_W, GL_W zur Ansteuerung der MOSFETS der Endstufe 26 ausgegeben werden. Überdies dient der Motor-IC 36 zur Kurzschlussprävention für die Ansteuerung der Endstufe 26. Mit anderen Worten wird vermieden, dass in einem gemeinsamen Brückenzweig angeordnete Transistoren der Endstufe 26 zeitgleich leitend geschaltet werden und die Endstufe hierdurch Schaden nimmt. Auch die Ansteuersignale GH_U, GL_U, GH_V, GL_V, GH_W, GL_W sind als pulsweitenmodulierte Signale ausgeführt. Das jeweilige High (H)-Signal stellt jedoch im Wesentlichen die jeweilige Pegelumkehr des Low (L)-Signals für die Phasen U, V, W dar, wobei eine Totzeit zur Vermeidung des oben genannten Kurzschlusses zwischen den Flanken der Signale liegt. Der Mikrocontroller, der Motor-IC 36 und die Endstufe 26 sind als Bestandteile eines Frequenzumrichters 25 dargestellt, dessen Bestandteile in einem gemeinsamen Gehäuse angeordnet sein können. Insbesondere können die Bestandteile des Frequenzumrichters 25 auf einer gemeinsamen Platine angeordnet sein.

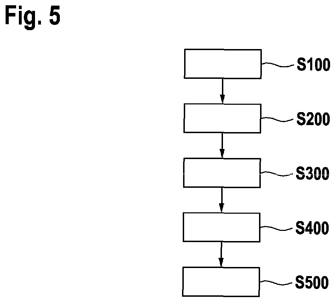

Die Fig. 5 zeigt ein Flussdiagramm veranschaulichend Schritte eines Ausführungsbeispiels eines erfindungsgemäßen Verfahrens zum Betrieb einer Karusselltüranordnung. In Schritt S100 wird eine Betätigung des Drehkreuzes durch einen Anwender ermittelt. Mit anderen Worten wird sensorisch erkannt, dass ein Anwender ursächlich für die Drehung der Türflügel um das Drehkreuz ist. In Schritt S200 wird eine extern veranlasste Drehung des Drehkreuzes in einem ersten Betriebszustand eines Freilaufbetriebes ermittelt. Dies erfolgt durch eine Ermittlung eines elektrisch induzierten Signals im Antrieb. Im Schritt S300 wird ein erstes elektrisches Signal an den Stator derart angelegt, dass im Wesentlichen kein Strom durch den Stator fließt. Das erste elektrische Signal kompensiert also das induzierte Signal. In Schritt S400 wird ein zweites elektrisches Signal in einem zweiten Betriebszustand an den Stator des elektrischen Antriebs angelegt. Der zweite Betriebszustand kennzeichnet sich durch eine höhere Drehzahl des Drehkreuzes beziehungsweise des Rotors als die Drehzahl des Drehkreuzes im ersten Betriebszustand. Das zweite elektrische Signal ist derart gewählt, dass es ein Bremsmoment auf das Drehkreuz beziehungsweise den Rotor zufolge hat. In Schritt S500 wird ein drittes elektrisches Signal in einem dritten Betriebszustand an die elektrischen Anschlüsse des Stators angelegt. Der dritte Betriebszustand kennzeichnet sich durch eine dritte und höhere Drehzahl des Drehkreuzes beziehungsweise des Rotors als die Drehzahl des Drehkreuzes im zweiten Betriebszustand. Das dritte elektrische Signal dient der Erzeugung eines Bremsmomentes auf das Drehkreuz beziehungsweise den Rotor, wobei das Verhältnis beider Drehzahlen einem Verhältnis der beiden Bremsmomente entspricht. Mit anderen Worten wird eine lineare Bremsmomentkennlinie über der Drehzahl des Drehkreuzes realisiert.

Im Ergebnis wird eine sicher in einem Freilaufbetrieb verwendbare Karusselltüranordnung vorgeschlagen, welche ein verbessertes Anwendererlebnis ermöglicht.

### Bezugszeichenliste

- 1: Karusselltüranordnung
- 2: Drehkreuz
- 3: Türflügel
- 4: Drehachse
- 5: Axialrichtung
- 6: Radialrichtung
- 7: Umfangsrichtung
- 8: Antrieb
- 9: Auswerteeinheit
- 10: Stator
- 11: Statorblechpaket
- 12: Statorscheibe
- 13: Spulen
- 14: Spulenkörper
- 15: Wicklung
- 17: Rotor
- 18: Rotorblechpaket
- 19: Permanentmagneten
- 20: Axiallager
- 21: Radiallager
- 25: Frequenzumrichter
- 26: Endstufe
- 27: Anschluss für Betriebsspannung
- 28: Positionssensor
- 35: Parametermodul
- 36: Motor-IC
- 39: Steuerleitung
- 40: Error Reporting
- 41: DC/DC-Wandler
- 42: Diode
- 43: Rotorscheibe

- 101: Adaptereinheit
- 102: Deckenbefestigungselement
- 103: Deckenkonstruktion
- 104: Fixierungselement
- 105: Unterdeckenelemente
- 106: Antriebsbefestigungselemente
- 107: Adapterplatte
- 110: Vorfixiereinheit
- 111: Anschlussaussparung
- 112: Abdeckscheibe

- S100-S500: Verfahrensschritte

## Patentansprüche

1. Verfahren zum Betrieb einer Karusselltüranordnung (1) mit
- einem Drehkreuz (2),
- einer Auswerteeinheit (9) und
- einem elektrischen Antrieb (8) mit
- einem Stator (10) und
- einem Rotor (17)
wobei der Rotor (17) koaxial zu einer Drehachse (4) des Drehkreuzes (2) anordenbar und mit dem Drehkreuz (2) zum direkten, getriebelosen Antrieb verbindbar ist, und das Verfahren **gekennzeichnet ist durch** die Schritte:
- Ermitteln (S200) einer extern veranlassten Drehung des Drehkreuzes (2) in einem ersten Betriebszustand eines Freilaufbetriebes, und
- Anlegen (S300) eines ersten elektrischen Signals an den Stator (10), welches derart gewählt ist, dass im Wesentlichen kein Strom durch den Stator (10) fließt.

2. Verfahren nach Anspruch 1 weiter umfassend
- Anlegen (S400) eines zweiten elektrischen Signals in einem zweiten Betriebszustand, welcher sich durch eine höhere Drehzahl des Drehkreuzes (2) als diejenige des Drehkreuzes (2) im ersten Betriebszustand auszeichnet, welches derart gewählt ist, dass ein Bremsmoment auf das Drehkreuz (2) ausgeübt wird.

3. Verfahren nach Anspruch 1 oder 2 weiter umfassend
- Ermitteln eines im Wesentlichen kontinuierlichen Übergangs vom ersten Betriebszustand in den zweiten Betriebszustand und im Ansprechen darauf
- im Wesentlichen kontinuierliches Variieren des ersten Signals zur Erzeugung des zweiten Signals.

4. Verfahren nach einem der vorstehenden Ansprüche weiter umfassend
- Anlegen (S500) eines dritten elektrischen Signals in einem dritten Betriebszustand, welcher sich durch eine dritte und höhere Drehzahl des Drehkreuzes (2) als diejenige des Drehkreuzes (2) im zweiten Betriebszustand auszeichnet, zur Erzeugung eines Bremsmomentes auf das Drehkreuz (2), wobei insbesondere ein Verhältnis beider Drehzahlen einem Verhältnis beider Bremsmomente entspricht.

5. Verfahren nach einem der vorstehenden Ansprüche umfassend
- Ermitteln (S100) einer Betätigung des Drehkreuzes durch einen Anwender und erst im Ansprechen darauf
- Anlegen des ersten elektrischen Signals.

6. Karusselltüranordnung mit
- einem Drehkreuz (2),
- einer Auswerteeinheit (3) und
- einem elektrischen Antrieb (8) mit
- einem Stator (10) und
- einem Rotor (17)
wobei der Rotor (17) koaxial zu einer Drehachse (4) des Drehkreuzes (2) anordenbar und mit dem Drehkreuz (2) zum direkten, getriebelosen Antrieb (8) verbindbar ist, wobei die Auswerteeinheit (9) eingerichtet ist, **dadurch gekennzeichnet, dass**
- in einem ersten Betriebszustand eines Freilaufbetriebes ein erstes elektrisches Signal an den Stator (10) anzulegen, welches derart bemessen ist, dass eine aufgrund einer Rotation des Türflügels (3) im Stator (10) induzierte Spannung im Wesentlichen keinen Stromfluss zur Folge hat.

7. Karusselltüranordnung nach Anspruch 6, welche eingerichtet ist, ein Verfahren nach einem der vorstehenden Ansprüche 1 bis 5 auszuführen.

8. Karusselltüranordnung nach einem der Ansprüche 6 oder 7, wobei der Stator (10) zur feststehenden Montage, insbesondere zur Deckenmontage eingerichtet ist, und mit dem Rotor (17) einen koaxial zur Drehachse (4) des Drehkreuzes (2) angeordneten Luftspalt bildet.

9. Karusselltüranordnung nach einem der Ansprüche 6 bis 8 weiter umfassend
- einen die Auswerteeinheit (9) umfassenden Frequenzumrichter (25) mit
- einer Endstufe (26), wobei
- die Auswerteeinheit (9) eingerichtet ist,
in Abhängigkeit eines jeweiligen Betriebszustandes ein pulsweitenmoduliertes viertes Signal zu erzeugen, und
- der Frequenzumrichter (25) eingerichtet ist, in Abhängigkeit des pulsweitenmodulierten Signals
- die Endstufe (26) mit einer mehrphasigen Repräsentation des vierten Signals anzusteuern.

10. Karusselltüranordnung nach Anspruch 9 weiter umfassend
- einen Anschluss für eine Betriebsspannung und
- ein Gehäuse, welches
- den Frequenzumrichter (25),
- die Endstufe (26) und
- die Auswerteeinheit (9)
umfasst, wobei insbesondere der Anschluss für die Betriebsspannung eingerichtet ist, die Auswerteeinheit (9), den Frequenzumrichter (25) und die Endstufe (26) mit elektrischer Energie zu versorgen.

11. Karusselltüranordnung nach einem der Ansprüche 6 bis 10 weiter umfassend
- ein Eingabemodul (35) welches eine Anwenderschnittstelle aufweist, welche zum Definieren des zweiten und/oder dritten Betriebszustandes eingerichtet ist.

12. Karusselltüranordnung nach einem der Ansprüche 6 bis 11, wobei die Auswerteeinheit (9) eingerichtet ist, auf Basis eines Positionssensors (28) im elektrischen Antrieb (8)
- eine aktuelle Drehzahl und/oder
- eine aktuelle Position und/oder
- eine aktuelle Geschwindigkeit
des Drehkreuzes (2) zu ermitteln.

## Claims

1. A method for operating a revolving door assembly (1), with
- a turnstile (2),
- an evaluation unit (9), and
- an electrical drive (8), with
- a stator (10) and
- a rotor (17),
wherein the rotor (17) can be disposed coaxially to an axis of rotation (4) of the turnstile (2) and can be connected to the turnstile (2) for direct gearless driving, and the method is **characterized by** the steps of:
- determining (S200) an externally caused rotation of the turnstile (2) in a first operating condition of a free-swing operation, and
- applying (S300) a first electrical signal to the stator (10), which is selected such that essentially no current flows through the stator (10).

2. The method according to claim 1, furthermore comprising
- applying (S400) a second electrical signal in a second operating condition, which is distinguished by a higher rotational speed of the turnstile (2) than the one of the turnstile (2) in the first operating condition, which signal is selected such that a brake torque is exerted onto the turnstile (2).

3. The method according to claim 1 or 2, furthermore comprising
- determining an essentially continuous transition from the first operating condition into the second operating condition and in response thereto
- essentially continuously varying the first signal for generating the second signal.

4. The method according to any of the preceding claims, furthermore comprising
- applying (S500) a third electrical signal in a third operating condition, which is distinguished by a third and higher rotational speed of the turnstile (2) than the one of the turnstile (2) in the second operating condition, for generating a brake torque onto the turnstile (2), wherein in particular a ratio of both rotational speeds corresponds to a ratio of both brake torques.

5. The method according to any of the preceding claims, comprising
- determining (S100) an actuation of the turnstile by a user and, only in response thereto,
- applying the first electrical signal.

6. A revolving door assembly, with,
- a turnstile (2),
- an evaluation unit (9), and
- an electrical drive (8), with
- a stator (10) and
- a rotor (17),
wherein the rotor (17) can be disposed coaxially to an axis of rotation (4) of the turnstile (2) and can be connected to the turnstile (2) for direct gearless driving (8), wherein the evaluation unit (9) is adapted, **characterized in that**
- in a first operating condition of a free-swing operation, to apply a first electrical signal to the stator (10), which is calculated such that based on a rotation of the door leaf (3), voltage induced into the stator (10) essentially does not result in any current flow.

7. The revolving door assembly according to claim 6, which is adapted to perform a method according to any of the preceding claims 1 to 5.

8. The revolving door assembly according to any of the claims 6 or 7, wherein the stator (10) is adapted for stationary mounting, in particular for ceiling mounting, and with the rotor (17) forms an air gap, which is disposed coaxially to the axis of rotation (4) of the turnstile (2).

9. The revolving door assembly according to any of the claims 6 to 8, furthermore comprising
- a frequency converter (25) comprising the evaluation unit (9) with
- a final stage (26), wherein
- the evaluation unit (9) is adapted depending on a respective operating condition, to generate a pulse-width modulated fourth signal,
- the frequency converter (25) is adapted, depending on the pulse-width modulated signal,
- to control the final stage (26) with a multiphase representation of the fourth signal.

10. The revolving door assembly according to claim 9, furthermore comprising
- a connection for an operating voltage, and
- a housing, which comprises
- the frequency converter (25),
- the final stage (26), and
- the evaluation unit (9),
wherein in particular the connection for the operating voltage is adapted to supply electric energy to the evaluation unit (9), to the frequency converter (25) and to the final stage (26).

11. The revolving door assembly according to any of the claims 6 to 10, furthermore comprising
- an input module (35), which includes a user interface, which is adapted for defining the second and/or the third operating conditions.

12. The revolving door assembly according to any of the claims 6 to 11, wherein, based on a position sensor (28) in the electrical drive (8), the evaluating unit (9) is adapted to determine
- a current rotational speed and/or
- a current position and/or
- a current speed
of the turnstile (2).

## Revendications

1. Méthode pour l'opération d'un agencement de porte à tambour (1), avec,
- un tourniquet (2),
- une unité d'évaluation (9), et
- un entraînement (8) électrique avec
- un stator (10), et
- un rotor (17),
dans laquelle le rotor (17) peut être agencé coaxialement par rapport à un axe de rotation (4) du tourniquet (2) et peut être connecté au tourniquet (2) pour un entraînement direct sans transmission, et la méthode est **caractérisée par** les étapes :
- déterminer (S200) une rotation du tourniquet (2) causée extérieurement dans un premier état d'opération d'un fonctionnement en roue libre, et
- appliquer (S300) un premier signal électrique au stator (10), lequel est sélectionné de telle façon qu'essentiellement aucun courant ne passe à travers le stator (10).

2. Méthode selon la revendication 1, comportant par ailleurs
- appliquer (S300) un deuxième signal électrique dans un deuxième état d'opération, lequel se distingue par un nombre de tours plus élevé du tourniquet (2) que celui du tourniquet (2) dans le premier état de fonctionnement, lequel est sélectionné de telle façon qu'un moment de freinage est exercé sur le tourniquet (2).

3. Méthode selon la revendication 1 ou 2, comportant par ailleurs
- déterminer une transition essentiellement continue du premier état de fonctionnement au deuxième état de fonctionnement et en réponse à cela
- une variation essentiellement en continu du premier signal pour générer le deuxième signal.

4. Méthode selon l'une des revendications précédentes, comportant par ailleurs
- appliquer (S500) un troisième signal électrique dans un troisième état de fonctionnement, lequel se distingue par un troisième nombre de tours et plus élevé du tourniquet (2) que celui du tourniquet (2) dans le deuxième état de fonctionnement, pour générer un moment de freinage sur le tourniquet (2), dans laquelle tout particulièrement un rapport des deux nombres de tours correspond à un rapport des deux moments de freinage.

5. Méthode selon l'une des revendications précédentes, comportant
- déterminer (S100) un actionnement du tourniquet par un utilisateur et seulement en réponse à cela
- appliquer le premier signal électrique.

6. Agencement de porte à tambour avec
- un tourniquet (2),
- une unité d'évaluation (9), et
- un entraînement (8) électrique avec
- un stator (10), et
- un rotor (17),
dans lequel le rotor (17) peut être agencé coaxialement par rapport à un axe de rotation (4) du tourniquet (2) et peut être connecté au tourniquet (2) pour un entraînement (8) direct sans transmission, dans lequel l'unité d'évaluation (9) est adaptée, **caractérisé en ce que**
- dans un premier état de fonctionnement d'un fonctionnement en roue libre, à appliquer un premier signal électrique au stator (10), lequel signal est calculé de telle façon qu'une tension induite dans le stator (10) en raison d'une rotation du vantail de portail (3) essentiellement ne cause pas de passage de courant.

7. Agencement de porte à tambour selon la revendication 6, lequel est adapté à exécuter une méthode selon l'une des revendications précédentes 1 à 5.

8. Agencement de porte à tambour selon l'une des revendications 6 ou 7, dans lequel le stator (10) est adapté pour le montage stationnaire, tout particulièrement pour le montage au plafond, et avec le rotor (17) forme une interstice d'air qui est agencée coaxialement à l'axe de rotation (4) du tourniquet (2).

9. Agencement de porte à tambour selon l'une des revendications 6 à 8, comportant par ailleurs
- un convertisseur de fréquence (25) comportant l'unité d'évaluation (9) avec
- un étage de sortie (26), dans lequel
- l'unité d'évaluation (9) est adaptée
- en fonction d'un état de fonctionnement respectif, à générer un quatrième signal modulé en largeur d'impulsions, et
- en fonction du signal modulé en largeur d'impulsions, le convertisseur de fréquence (25) est adapté
- à contrôler l'étage de sortie (26) avec une représentation multiphase du quatrième signal.

10. Agencement de porte à tambour selon la revendication 9, comportant par ailleurs
- une connexion pour une tension de fonctionnement, et
- un boîtier, lequel comporte
- le convertisseur de fréquence (25),
- l'étage de sortie (26), et
- l'unité d'évaluation (9),
dans lequel tout particulièrement la connexion pour la tension de fonctionnement est adaptée à alimenter en énergie électrique l'unité d'évaluation (9), le convertisseur de fréquence (25) et l'étage de sortie (26).

11. Agencement de porte à tambour selon l'une des revendications 6 à 10, comportant par ailleurs
- un module de saisie (35), lequel comprend une interface utilisateur, laquelle est adaptée à définir le deuxième et/ou le troisième état de fonctionnement.

12. Agencement de porte à tambour selon l'une des revendications 6 à 11, dans lequel, sur la base d'un capteur de positions (28) dans l'entraînement électrique (8), l'unité d'évaluation (9) est adaptée à déterminer
- un nombre de tours actuel et/ou
- une position actuelle et/ou
- une vitesse actuelle
du tourniquet (2).
